# EUROPEAN PATENT APPLICATION

(11) **EP 4 668 867 A1**
(43) Date of publication of application: **24.12.2025**
(21) Application number: 23922920.6
(22) Date of filing: 12.12.2023
(51) Int. Cl.: H04W 36/26, H04W 36/08, H04W 36/30

(54) **WIRELESS TERMINAL, WIRELESS ACCESS NETWORK NODE, AND METHODS THEREFOR**

(30) Priority: 14.02.2023 JP 2023020905
(71) Applicant: NEC Corporation, 108-8001 Tokyo (JP)
(72) Inventor: FUTAKI Hisashi, Tokyo 108-8001 (JP)
(74) Representative: Mathys & Squire
(86) International application number: PCT/JP2023/044352
(87) International publication number: WO 2024/171587

(57) **Abstract**

A radio terminal receives a first message containing configuration information for a conditional handover from a network. The radio terminal stores failure information indicating an elapsed time from a start of evaluation of an execution condition for the conditional handover to a given point in time in response to detecting a handover failure or a radio link failure after receiving the first message. The radio terminal transmits a second message containing the failure information to the network. For example, this helps improve a failure report provided by a radio terminal to a network regarding a radio link failure or a handover failure detected in relation to a conditional handover.

## Description

### Technical Field

The present disclosure relates to a radio communication network and particularly to various technologies that directly or indirectly contribute to improving network energy saving.

### Background Art

For 3rd Generation Partnership Project (3GPP (registered trademark)) Release 18, the 3GPP has discussed network energy saving (see, for example, Non-Patent Literature 1-7). Network energy saving is abbreviated as NES.

Non-Patent Literature 1 introduces various technologies for improving network energy saving. These technologies include adaptive transmission and reception of signals by a network in the time domain. For example, the network may adapt the transmission pattern of downlink common channels and signals, or may adapt the transmission pattern or availability of uplink random access occasions. A potential list of downlink common channels and signals includes, for example, Synchronization Signal (SS)/Physical Broadcast Channel (PBCH) block (SSB), System Information (SI), paging, and cell common Physical Downlink Control Channel (PDCCH).

Additionally or alternatively, the network may reduce or omit time occasions for UE-specific resources during a period of low activity or inactivity of a cell. A potential list of UE-specific resources includes periodic/semi-static Channel State Information Reference Signal (CSI-RS), group-common/UE-specific PDCCH, Semi-Persistent Scheduling (SPS) Physical Downlink Shared Channel (PDSCH), Physical Uplink Control Channel (PUCCH) carrying Scheduling Request (SR), PUCCH/Physical Uplink Shared Channel (PUSCH) carrying CSI reports, PUCCH carrying hybrid automatic repeat request-acknowledgement (HARQ-ACK) for SPS, Configured Grant (CG) PUSCH, Sounding Reference Signal (SRS), and Positioning Reference Signal (PRS).

The network may provide a mechanism for notifying UEs whether a cell is inactive. This may include UE DRX configuration enhancements, such as adjusting or omitting the discontinuous reception (DRX) cycle or DRX start offset for UEs in connected mode or idle or active mode, thereby potentially allowing for longer opportunities for cell inactivity. During a cell discontinuous transmission (DTX) or DRX, the cell may have no transmission or reception, or may only keep limited transmission or reception. For example, the cell does not need to transmit or receive some periodic signals and channels, such as common channels and signals, or UE-specific signals and channels.

Other technologies for improving NES include those in the frequency domain. In one example of a frequency domain technology, the network may support inter-band Carrier Aggregation (CA) using an SSB-less Secondary Cell (SCell). Additionally or alternatively, frequency domain technologies may support enhancements to enable a UE-group-common or cell-specific Bandwidth Part (BWP) configuration or BWP switching, or both. These technologies may support functional enhancements that enable SPS PDSCH reception, Type-2 CG PUSCH transmission, and SP-CSI reporting on PUSCH without requiring reactivation after BWP switching. Additionally or alternatively, frequency domain technologies may support enhancements to enable adaptation of the bandwidth of active BWPs through group common signaling, allowing continued operation in the same BWP. Some frequency resources within an active BWP may be deactivated.

Further other technologies for improving NES include technologies in the spatial domain. Spatial domain technologies may enhance the dynamic adaptation of spatial elements, such as the number of active transceiver chains or the number of active antenna panels in a gNB, in the transmission or reception of channels and signals, or both. Additionally or alternatively, spatial domain technologies may support dynamic adaptation of the number of TRPs that transmit and/or receive channels and signals in a case where UEs are configured with multiple Transmission and Reception Points (TRPs).

Still other techniques for improving NES include technologies in the power domain. These technologies may enable dynamic adaptation of transmission power or power spectral density (PSD) of downlink signals and channels by enhancing relevant configuration for UEs (e.g., power offset considering potential power adaptation) and/or UE feedback (e.g., CSI reports).

Non-Patent Literature 1 states that, from the perspective of the upper layer for NES, cell selection and reselection and connected mode mobility enhancements can be discussed. With regard to cell selection and reselection enhancements, Non-Patent Literature 1 states that, for backward compatibility, there is a need to allow NES cells to prevent legacy UEs from camping. More specifically, Non-Patent Literature 1 states that NES cells need to be able to configure whether to prevent legacy UEs, while allowing NES-capable UEs to camp on. Possible solutions include, but are not limited to, using an IntraFreqExcludedCellList or an InterFreqExcludedCellList or both, or using cellBarred or cell reservation fields transmitted in Master Information Block (MIB) or System Information Block (SIB).

On the other hand, with regard to connected mode mobility enhancements, Non-Patent Literature 1 states that during the switching of NES modes, it is possible to accelerate handovers of UEs by enhancing the conditional handover (CHO) framework. These enhancements include evaluation of conditional handover conditions depending on the NES mode of the source cell, target cell, or both, and a method for indicating to a UE the triggering (or initiation) of the CHO evaluation.

Note that, currently, the definitions of the terms "NES cell" and "NES mode" are not yet clear. The terms "NES cell" and "NES mode" are considered to refer to an operating mode or state in which power consumption is reduced by using one or more of the various technologies described above for improving NES, or by using other technologies, or may refer to a cell in such an operating mode or state. The terms "NES cell" and "NES mode" may be replaced by other similar terms. For example, these may be replaced with terms such as NES state or period; low activity cell, mode, state, or period; inactive cell, mode, state, or period; deactivated/deactivation cell, mode, state, or period; or sleep cell, mode, state, or period.

Non-Patent Literature 2 states that one of the detailed objectives of the working item relating to NES in 3GPP Release 18 is to specify enhancements to the CHO procedure in cases where the target cell or the source cell is in NES mode.

Non-Patent Literature 3 states that there is a proposal to associate the CHO execution condition with the NES state (or NES mode) of the source cell in relation to handover scenario 1 (UEs are Handover due to switch of SOURCE cell to NES mode).In the existing CHO, the UE promptly starts evaluating the CHO execution condition in response to the reception of the CHO configuration including the CHO execution condition. Non-Patent Literature 3 states that there is a proposal to use a separate indication (NES mode indication) to the UE regarding the NES mode of the source cell in order to delay evaluation of the CHO execution condition.

Non-Patent Literature 4 proposes a CHO triggered by the UE determining that the source cell has entered NES mode, and more specifically proposes using the reception of an NES mode indication regarding the source cell as a CHO event trigger.

Non-Patent Literature 5 states that SI modification is necessary to reduce SSB transmission power, and that there are disadvantages to using the SI modification to notify UEs of cell deactivation in the source cell, specifically that cell power reduction is restricted by the SI modification period. For faster offloading/onloading of the active UEs, Non-Patent Literature 5 suggests notifying UEs of a future cell transmit power adjustment (decrease/increase) in a separate way from the step-by-step SI modification.

Additionally, Non-Patent Literature 5 states that CHO is effective for faster offloading/onloading of active UEs, but that the evaluation of CHO execution conditions may need to be changed so that the evaluation is triggered by cell deactivation rather than immediate evaluation in response to receipt of a CHO configuration. Non-Patent Literature 5 also states that, in NR non-terrestrial networks (NTN), event T1 with a delay component associated with an event trigger is defined as a method for executing CHO, and that similar considerations are necessary for cell activation.

Non-Patent Literature 6 states that the group mobility mechanism appears to be suitable for cases where the cell state changes dynamically. Non-Patent Literature 6 states that CHO configurations are provided to connected mode UEs by dedicated signaling, but that UEs do not start evaluation at this point. Non-Patent Literature 6 states that the network indicates a trigger for the CHO by Layer 1 (L1) or Layer 2 (L2) signaling based on the switching of the cell state from normal mode to NES mode.

Non-Patent Literature 7 states that, with regard to handover scenario 1 (UEs are Handover due to switch of SOURCE cell to NES mode), in order to apply CHO for NES purposes, it is necessary to update CHO execution conditions to indicate a change in the NES mode of the source cell. More specifically, Non-Patent Literature 7 states that a CHO execution condition may be that the UE receives an indication from the serving cell that the NES mode of the cell has been changed.

Additionally, Non-Patent Literature 7 states that one method of providing the indication of the NES mode of the source cell may be broadcast Radio Resource Control (RRC) signaling (e.g., SI update, paging), although this method is not recommended due to its disadvantages. Non-Patent Literature 7 states that the indication of the NES mode of the source cell may be sent by other methods, specifically dedicated RRC signaling (e.g., RRCReconfiguration), L2 signaling (e.g., Medium Access Control (MAC) Control Element (CE)), dedicated L1 signaling (e.g., dedicated Downlink Control Information (DCI)), or common L1 signaling (e.g., group common DCI). Non-Patent Literature 7 suggests using common L1 signaling for the indication of a change in the NES mode of the source cell.

### Citation List

### Non Patent Literature

[Non-Patent Literature 1] 3GPP TR 38.864 V18.0.0 (2022-12) "3rd Generation Partnership Project; Technical Specification Group Radio Access Network; Study on network energy savings for NR (Release 18)", January 2023
[Non-Patent Literature 2] Huawei, "New WID: Network energy savings for NR", RP-223540, 3GPP TSG RAN Meeting #98-e, December 12-16, 2022
[Non-Patent Literature 3] Nokia, "[PRE120][304][NES] Summary of Connected Mode Mobility - 8.3.5 (Nokia)", R2-2213703, 3GPP TSG-RAN WG2 Meeting #120, Toulouse, France, November 14-18, 2022
[Non-Patent Literature 4] InterDigital, "NES mobility aspects", R2-2212326, 3GPP TSG-RAN WG2 Meeting #120, Toulouse, France, November 14-18, 2022
[Non-Patent Literature 5] Nokia, Nokia Shanghai Bell, "Mobility enhancements for NES", R2-2211968, 3GPP TSG-RAN WG2 Meeting #120, Toulouse, France, November 14-18, 2022
[Non-Patent Literature 6] Fujitsu, "Consideration on group mobility for network energy saving", R2-2212641, 3GPP TSG-RAN WG2 Meeting #120, Toulouse, France, November 14-18, 2022
[Non-Patent Literature 7] Intel Corporation, "Further considerations of group handover", R2-2212115, 3GPP TSG-RAN WG2 Meeting #120, Toulouse, France, November 14-18, 2022
[Non-Patent Literature 8] 3GPP TS 38.331 V17.3.0 (2022-12) "3rd Generation Partnership Project; Technical Specification Group Radio Access Network; NR; Radio Resource Control (RRC) protocol specification (Release 17)", January 2023

### Summary of Invention

### Technical Problem

The inventor examined technologies for improving NES, particularly conditional handover enhancements for NES, and identified various problems. In this specification, the term "conditional handover" refers not only to conditional handovers in non-dual connectivity operation, but also to conditional Special Cell (SpCell) changes in dual connectivity operation. In dual connectivity operation, the SpCell is either the Primary Cell (PCell) of the Master Cell Group (MCG) or the Primary SCG cell (PSCell) of a Secondary Cell Group (SCG). The SpCell supports PUCCH transmission and contention-based random access. From this perspective, a conditional handover can be rephrased as a conditional reconfiguration or conditional mobility. A conditional handover can be either an intra-Radio Access Network (RAN) node (e.g., gNB) conditional handover or an inter-RAN node conditional handover. In other words, in a conditional handover, the source cell and one or more candidate target cells may be provided by a single RAN node (e.g., gNB) or by different RAN nodes.

One of the problems identified by the inventor relates to the handling of handover failures and radio link failures associated with delayed CHO condition evaluation for a NES type CHO. Specifically, it is unclear what information about handover failures or radio link failures a UE configured with a NES type CHO needs to report to the network in a case where it detects these failures. A NES type CHO may be a type of CHO in which the UE does not immediately start evaluating the CHO execution conditions in response to receiving the CHO configuration, but delays the start of the CHO execution condition evaluation. A NES type CHO may require that the UE recognize (or detect) a certain event or condition related to the change of the NES mode of the source cell after receiving the CHO configuration, in order to trigger the execution of the CHO or the start of the execution condition evaluation. A NES type CHO may require that the UE recognize that the source cell has been or will be deactivated by some means after receiving the CHO configuration, in order to trigger the execution of the CHO or the start of the execution condition evaluation. A NES type CHO may require that the UE receive an indication or signal of low activity of the source cell after receiving the CHO configuration, in order to trigger the execution of the CHO. As explained above with reference to Non-Patent Literature 3, 5, and 6, it has been proposed that, in a NES type CHO, the UE delays the start of evaluation of CHO execution conditions, for example, until reception of a NES mode indication. Reporting information specific to such a NES-type CHO may be desirable.

Another one of the problems identified by the inventor concerns the behavior of a UE in a case where it detects a radio link failure before starting a delayed CHO condition evaluation for a NES type CHO. Specifically, it is unclear how the UE should perform an RRC connection reestablishment procedure.

A further problem identified by the inventor relates to the operation of a UE configured with a NES type CHO in a case where it detects a handover failure or a radio link failure. It is unclear how a UE configured with a NES-type CHO should handle the source cell of the conditional handover during cell selection in an RRC connection reestablishment procedure in a case where a handover or radio link failure is detected.

A further problem identified by the inventor relates to the operation of a UE configured with both a normal type CHO and a NES type CHO. A normal type CHO is an existing CHO, meaning that it does not require, in order for its execution to be triggered, the UE to receive an indication or signal indicating low activity of the source cell. It is unclear how the UE should operate in a case where one or more execution conditions for a candidate target cell for a normal type CHO and one or more execution conditions for a candidate target cell for a NES type CHO are satisfied simultaneously.

One of the objects to be achieved by the example embodiments disclosed herein is to provide apparatuses, methods, and programs that contribute to solving at least one of a plurality of problems, including the problems described above. It should be noted that this object is only one of the objects to be achieved by the example embodiments disclosed herein. Other objects or problems and novel features will become apparent from the following description and the accompanying drawings.

### Solution to Problem

In a first aspect, a radio terminal includes at least one memory and at least one processor coupled to the at least one memory. The at least one processor is configured to receive a first message containing configuration information for a conditional handover from a network. The at least one processor is configured to store failure information indicating an elapsed time from a start of evaluation of an execution condition for the conditional handover to a given point in time in response to detecting a handover failure or a radio link failure after receiving the first message. The at least one processor is configured to transmit a second message containing the failure information to the network.

In a second aspect, a method performed by a radio terminal includes the steps of:
(a) receiving a first message containing configuration information for a conditional handover from a network;
(b) storing failure information indicating an elapsed time from a start of evaluation of an execution condition for the conditional handover to a given point in time in response to detecting a handover failure or a radio link failure after receiving the first message; and
(c) transmitting a second message containing the failure information to the network.

In a third aspect, a RAN node includes at least one memory and at least one processor coupled to the at least one memory. The at least one processor is configured to receive a message containing failure information related to a handover failure or a radio link failure from a radio terminal. The failure information indicates an elapsed time from a start of evaluation of an execution condition for a conditional handover to a given point in time.

In a fourth aspect, a method performed by a RAN node includes receiving a message containing failure information related to a handover failure or a radio link failure from a radio terminal. The failure information indicates an elapsed time from a start of evaluation of an execution condition for a conditional handover to a given point in time.

In a fifth aspect, the radio terminal includes at least one memory and at least one processor coupled to the at least one memory. The at least one processor is configured to receive a message containing configuration information for a conditional handover, which contains a configuration of one or more candidate target cells and a configuration of one or more handover execution conditions for each candidate target cell. The at least one processor is configured to, if a radio link failure is detected before evaluation of the one or more handover execution conditions is started after the message is received, and if one of the one or more candidate target cells is selected by cell selection, execute the conditional handover by applying the configuration associated with the selected cell.

In a sixth aspect, a method performed by a radio terminal includes the steps of:
(a) receiving a message containing configuration information for a conditional handover, the configuration information containing a configuration of one or more candidate target cells and a configuration of one or more handover execution conditions for each candidate target cell; and
(b) if a radio link failure is detected before evaluation of the one or more handover execution conditions is started after the message is received, and if one of the one or more candidate target cells is selected by cell selection, executing the conditional handover by applying the configuration associated with the selected cell.

In a seventh aspect, a radio terminal includes at least one memory and at least one processor coupled to the at least one memory. The at least one processor is configured to receive a message containing configuration information for a conditional handover, which contains a configuration of one or more candidate target cells and a configuration of one or more handover execution conditions for each candidate target cell. The at least one processor is configured to, if a radio link failure is detected before evaluation of the one or more handover execution conditions is started after the message is received, and if one of the one or more candidate target cells is selected by cell selection, transmit a Radio Resource Control (RRC) Reestablishment Request message without applying the configuration of the selected cell even if the message includes a first field or information element.

In an eighth aspect, a method performed by a radio terminal includes the steps of:
(a) receiving a message containing configuration information for a conditional handover, the configuration information containing a configuration of one or more candidate target cells and a configuration of one or more handover execution conditions for each candidate target cell; and
(b) if a radio link failure is detected before evaluation of the one or more handover execution conditions is started after the message is received, and if one of the one or more candidate target cells is selected by cell selection, transmitting a Radio Resource Control (RRC) Reestablishment Request message without applying the configuration of the selected cell even if the message includes a first field or information element.

In a ninth aspect, a radio terminal includes at least one memory and at least one processor coupled to the at least one memory. The at least one processor is configured to receive a message containing configuration information for a conditional handover, the configuration information containing a configuration of one or more candidate target cells and a configuration of one or more handover execution conditions for each candidate target cell. The at least one processor is configured to, if a handover failure or radio link failure is detected after receiving the message, and a source cell of the conditional handover is in a Network Energy Saving (NES) mode, lower a priority of the source cell in cell selection during an RRC connection reestablishment procedure compared to a case where the source cell is not in the NES mode.

In a tenth aspect, a method performed by a radio terminal includes the steps of:
(a) receiving a message containing configuration information for a conditional handover, the configuration information containing a configuration of one or more candidate target cells and a configuration of one or more handover execution conditions for each candidate target cell; and
(b) if a handover failure or radio link failure is detected after receiving the message, and a source cell of the conditional handover is in a Network Energy Saving (NES) mode, lowering a priority of the source cell in cell selection during an RRC connection reestablishment procedure compared to a case where the source cell is not in the NES mode.

In an eleventh aspect, a radio terminal includes at least one memory and at least one processor coupled to the at least one memory. The at least one processor is configured to receive first configuration information for a first type of conditional handover and second configuration information for a second type of conditional handover via one or more messages. The first type of conditional handover is a conditional handover that does not require, in order for its execution to be triggered, a first signal relating to low activity of a source cell of the conditional handover to be received by the radio terminal after the first configuration information is received. The second type of conditional handover is a conditional handover that requires, in order for its execution to be triggered, the first signal to be received by the radio terminal after the second configuration information is received. The at least one processor is configured to execute the second type of conditional handover if an execution condition for the first type of conditional handover and an execution condition for the second type of conditional handover are satisfied simultaneously.

In a twelfth aspect, a method performed by a radio terminal includes the steps of:
(a) receiving first configuration information for a first type of conditional handover and second configuration information for a second type of conditional handover via one or more messages; and
(b) executing the second type of conditional handover if an execution condition for the first type of conditional handover and an execution condition for the second type of conditional handover are satisfied simultaneously.

In a thirteenth aspect, a radio terminal includes at least one memory and at least one processor coupled to the at least one memory. The at least one processor is configured to receive first configuration information for a first type of conditional handover and second configuration information for a second type of conditional handover via one or more messages. The at least one processor is configured to execute the first type of conditional handover if an execution condition for the first type of conditional handover and an execution condition for the second type of conditional handover are satisfied simultaneously.

In a fourteenth aspect, a method performed by a radio terminal includes the steps of:
(a) receiving first configuration information for a first type of conditional handover and second configuration information for a second type of conditional handover via one or more messages; and
(b) executing the first type of conditional handover if an execution condition for the first type of conditional handover and an execution condition for the second type of conditional handover are satisfied simultaneously.

In a fifteenth aspect, a radio terminal includes at least one memory and at least one processor coupled to the at least one memory. The at least one processor is configured to receive, via one or more messages, first configuration information for a first type of conditional handover, second configuration information for a second type of conditional handover, and third configuration information indicating that one of the first and second types of conditional handover has priority over the other. The at least one processor is configured to execute one of the first and second types of conditional handovers in accordance with the third configuration information if an execution condition for the first type of conditional handover and an execution condition for the second type of conditional handover are satisfied simultaneously.

In a sixteenth aspect, a method performed by a radio terminal includes the steps of:
(a) receiving, via one or more messages, first configuration information for a first type of conditional handover, second configuration information for a second type of conditional handover, and third configuration information indicating that one of the first and second types of conditional handover has priority over the other; and
(b) executing one of the first and second types of conditional handovers in accordance with the third configuration information if an execution condition for the first type of conditional handover and an execution condition for the second type of conditional handover are satisfied simultaneously.

In a seventeenth aspect, a RAN node includes at least one memory and at least one processor coupled to the at least one memory. The at least one processor is configured to transmit to a radio terminal, via one or more messages, first configuration information for a first type of conditional handover, second configuration information for a second type of conditional handover, and third configuration information indicating that one of the first and second types of conditional handover has priority over the other. The third configuration information causes the radio terminal to execute one of the first and second types of conditional handovers in accordance with the third configuration information if an execution condition for the first type of conditional handover and an execution condition for the second type of conditional handover are satisfied simultaneously.

In an eighteenth aspect, a method performed by a RAN node includes transmitting to a radio terminal, via one or more messages, first configuration information for a first type of conditional handover, second configuration information for a second type of conditional handover, and third configuration information indicating that one of the first and second types of conditional handover has priority over the other. The third configuration information causes the radio terminal to execute one of the first and second types of conditional handovers in accordance with the third configuration information if an execution condition for the first type of conditional handover and an execution condition for the second type of conditional handover are satisfied simultaneously.

In a nineteenth aspect, a program includes a set of instructions (software code) that, when loaded into a computer, causes the computer to perform the method according to the second, fourth, sixth, eighth, tenth, twelfth, fourteenth, sixteenth, or eighteenth aspect described above.

### Advantageous Effects of Invention

According to the aspects described above, it is possible to provide apparatuses, methods, and programs that contribute to solving at least one of a plurality of problems, including the problems described above.

### Brief Description of Drawings

Fig. 1 is a diagram showing an example configuration of a radio communication system related to one or more example embodiments;
Fig. 2 is a diagram showing an example configuration of a radio communication system related to one or more example embodiments;
Fig. 3 is a diagram showing an example configuration of a radio communication system related to one or more example embodiments;
Fig. 4 is a flowchart showing an example operation of a UE related to one or more example embodiments;
Fig. 5 is an example of a format of a UEInformationResponse message related to one or more example embodiments;
Fig. 6 is a flowchart showing an example operation of a UE related to one or more example embodiments;
Fig. 7 is a flowchart showing an example operation of a UE related to one or more example embodiments;
Fig. 8 is a flowchart showing an example operation of a UE related to one or more example embodiments;
Fig. 9 is a flowchart showing an example operation of a UE related to one or more example embodiments;
Fig. 10 is a flowchart showing an example operation of a UE related to one or more example embodiments;
Fig. 11 is a flowchart showing an example operation of a UE related to one or more example embodiments;
Fig. 12 is a block diagram showing an example configuration of a RAN node related to one or more example embodiments; and
Fig. 13 is a block diagram showing an example configuration of a UE related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any suitable combination. These multiple example embodiments have novel features that differ from one another. Accordingly, these multiple example embodiments contribute to achieving different objectives or solving different problems and contribute to achieving different advantages.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are described with respect to the 3GPP 5th generation mobile communication system (5G system) and its evolution. However, these example embodiments can also be applied to other radio communication systems that support a conditional handover similar to that of the 3GPP system.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

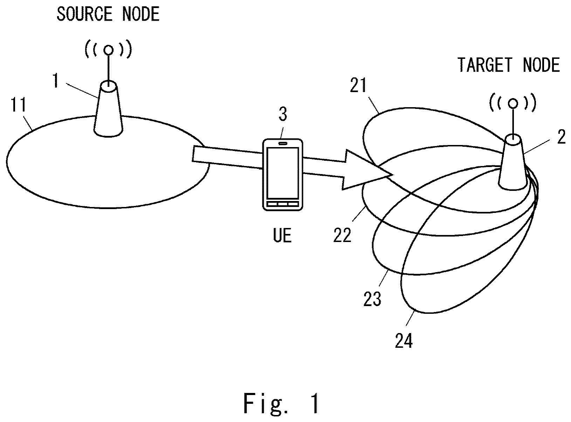

First, the configuration and operation of a plurality of network elements common to a plurality of example embodiments are described. Fig. 1 shows an example configuration of a radio communication system related to a plurality of example embodiments. In the example shown in Fig. 1, the radio communication system includes a RAN node 1, a RAN node 2, and a UE 3. The UE 3 may be referred to as a radio terminal 3. Each element (network function) shown in Fig. 1 may be implemented, for example, as a network element on dedicated hardware, as a software instance running on dedicated hardware, or as a virtualized function instantiated on an application platform.

The RAN node 1 may be a Central Unit (e.g., gNB-CU) in a cloud RAN (C-RAN) deployment, or a combination of a CU and one or more Distributed Units (e.g., gNB-DUs). C-RAN is also referred to as CU/DU split. Additionally, the CU may include a Control Plane (CP) Unit (e.g., gNB-CU-CP) and one or more User Plane (UP) Units (e.g., gNB-CU-UP). Accordingly, the RAN node 1 may be a CU-CP or a combination of a CU-CP and a CU-UP. Similarly, the RAN node 2 may be a CU or a combination of a CU and one or more DUs. The RAN node 2 may be a CU-CP or a combination of a CU-CP and a CU-UP.

Each of the RAN nodes 1 and 2 may be a Next Generation Radio Access Network (NG-RAN) node. An NG-RAN node may be a gNB or an ng-eNB. An ng-eNB provides E-UTRA user plane and control plane protocol termination to a UE and is connected to a 5GC via an NG interface. The radio access technology (RAT) of the RAN node 1 may differ from that of the RAN node 2.

The RAN node 1 provides at least one cell 11. The RAN node 2 provides one or more cells (e.g., four cells 21 to 24). In the example shown in Fig. 1, the cell 11 provided by the RAN node 1 is a current serving cell for the UE 3, and the UE 3 is handed over from the cell 11 to one of the cells provided by the RAN node 2. Accordingly, in the following, the RAN node 1 is referred to as the source node or source RAN node, and the RAN node 2 is referred to as the target node or target RAN node. The cell 11 is referred to as the source cell. The cells 21 to 24 are referred to as target cells or candidate target cells. The source node 1, the target node 2, and the UE 3 support a conditional handover (CHO). A CHO is a handover procedure that is executed only if one or more configured CHO execution conditions are met. Although not shown in Fig. 1, multiple candidate target cells provided by multiple candidate target nodes 2 may be prepared for a CHO.

In a CHO procedure, the UE 3 receives configuration information for the CHO (hereinafter referred to as CHO configuration) from the source node 1. A CHO configuration includes configurations of one or more candidate target cells, which are prepared by one or more candidate target nodes, as well as the configurations of one or more CHO execution conditions that are associated with each candidate target cell.

Each candidate target cell configuration is generated by the candidate target node (e.g., target node 2) that provides (or prepares) this candidate target cell. Each candidate target cell configuration may be a radio bearer (RB) configuration, a radio resource configuration, an RRC reconfiguration message, or any combination thereof, generated by the candidate target node (e.g., target node 2) that provides (or prepared) the candidate target cell.

On the other hand, a CHO execution condition is generated by the source node 1. A CHO execution condition may be composed of one or more trigger conditions. A condition or criterion that triggers a CHO event may be similar to that for a measurement report event, and may be, for example, CondEvent A3, CondEvent A4, or CondEvent A5. The UE 3 evaluates CHO execution condition(s). If the execution condition(s) of a candidate target cell is met, the UE 3 executes a conditional reconfiguration (CHO in this case) by applying the configuration of this candidate target cell. Specifically, the UE 3 detaches from the source node 1, applies the configuration corresponding to the selected candidate target cell (i.e., the candidate target cell whose execution condition(s) is met) and synchronizes with the selected candidate target cell. If the execution conditions of two or more candidate target cells are satisfied, the UE 3 may select one of those candidate target cells and perform the above operation.

A CHO configuration may be a conditionalReconfiguration Information Element (IE) or field contained in an RRC reconfiguration message. The term "information element (IE)" used in this specification may be referred to as "field". The configuration of the conditionalReconfiguration IE and its handling by the UE are described in clauses 5.3.5.13 and 6.3.2 of 3GPP TS 38.331 (Non-Patent Literature 8). The conditionalReconfiguration IE can contain a condReconfigToAddModList IE. The condReconfigToAddModList IE relates to a list of conditional reconfigurations (e.g., CHO) to be added or modified, and for each entry, it contains a condReconfigId IE, as well as a condExecutionCond IE and a condRRCReconfig IE associated therewith. The condExecutionCond IE indicates one or more execution conditions that need to be fulfilled in order to trigger the execution of a conditional reconfiguration (e.g., CHO). The condRRCReconfig IE is a candidate target cell configuration, specifically an RRC Reconfiguration message, which is applied in a case where one or more associated execution conditions are met.

The CHO shown in Fig. 1 may be an intra-RAN node conditional handover. In this case, the source node 1 and the target node 2 may be the same RAN node (e.g., gNB). The source node 1 may correspond to a gNB-CU and a source gNB-DU, and the target node 2 may correspond to the same gNB-CU and a target gNB-DU.

The CHO shown in Fig. 1 may be a conditional handover within (intra-MN) or between (inter-MN) master nodes (MN) in dual connectivity operation. An intra-MN or inter-MN conditional handover may be referred to as a conditional PCell change. The CHO shown in Fig. 1 may be a conditional change from a master node to a gNB or a conditional change from a gNB to a master node.

As described above, the term "conditional handover (CHO)" used in this specification may refer to conditional PSCell change (CPC) during dual connectivity operation. CPC includes intra-SN CPC and inter-SN CPC. Intra-SN CPC may be referred to as conditional SN modification. The following describes intra-SN CPC and inter-SN CPC.

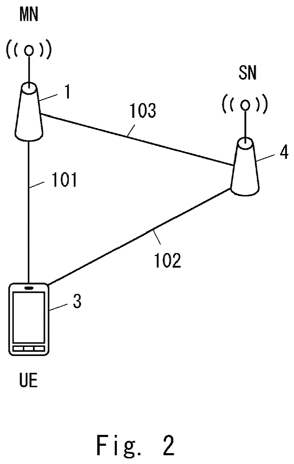

Fig. 2 shows another example configuration of a radio communication system related to a plurality of example embodiments. In the example of Fig. 2, the radio communication system includes a RAN node 1, a RAN node 4, and a UE 3. Each element (network function) shown in Fig. 2 may be implemented, for example, as a network element on dedicated hardware, as a software instance running on dedicated hardware, or as a virtualized function instantiated on an application platform. The RAN node 1, the RAN node 4, and the UE 3 in the example of Fig. 2 may have the same configurations and functions as the RAN node 1, the RAN node 2, and the UE 3 in the example of Fig. 1.

The RAN node 1 and the RAN node 4 communicate with each other via an inter-node interface (e.g., Xn interface) 103. The RAN node 1 and the RAN node 4 operate as an MN and an SN, respectively, in dual connectivity. The UE 3 communicates with the MN 1 and the SN 2 via air interfaces 101 and 102, and performs dual connectivity with an MCG and an SCG. This dual connectivity may be Multi-Radio Dual Connectivity (MR-DC).

The RAN node 4 and the UE 3 support intra-SN CPC. Intra-SN CPC may be referred to as SN-initiated conditional SN modification without MN involvement. Intra-SN CPC is an intra-SN PSCell change procedure that is executed only if a CPC execution condition is met.

In an intra-SN CPC procedure, the UE 3 receives from the SN 4 configurations of one or more candidate (target) PSCell configurations, which are prepared by the SN 4, as well as one or more associated CPC execution conditions. Each candidate PSCell configuration and associated CPC execution condition(s) are contained in a CPC configuration for intra-SN CPC. The SN 4 may send these to the UE 3 via the MN 1, or may send them to the UE 3 via a direct signaling radio bearer (e.g., Signaling Radio Bearer 3 (SRB3)) between the SN 4 and the UE 3.

Each candidate PSCell configuration includes at least configuration information for a candidate PSCell. Each candidate PSCell configuration may further include configuration information for one or more SCells associated with (i.e., configured together with or in association with) the candidate PSCell. Each candidate PSCell configuration may be a radio bearer (RB) configuration, a cell group (CG) configuration, an SCG configuration, an SCG radio resource configuration, or any combination thereof. Specifically, each candidate PSCell configuration may be an RRC reconfiguration message generated by the SN 4 (hereinafter referred to as an SN RRC reconfiguration message).

A CPC execution condition for an intra-SN CPC may be composed of one or more trigger conditions. A condition or criterion that triggers a CPC event may be similar to that for a measurement reporting event, and may be, for example, CondEvent A3, CondEvent A4, or CondEvent A5. The UE 3 evaluates CPC execution conditions. If the execution condition(s) of a candidate PSCell are met, the UE 3 detaches from the source PSCell, applies the configuration corresponding to the selected candidate PSCell (i.e., the candidate PSCell whose execution condition(s) are met), and synchronizes with the selected candidate PSCell. If the execution conditions of two or more candidate PSCells are satisfied, the UE 3 may select one of those candidate PSCells and perform the above operation.

A CPC configuration for intra-SN CPC may be a conditionalReconfiguration IE contained in an SN RRC Reconfiguration message. The conditionalReconfiguration IE can contain a condReconfigToAddModList IE. The condReconfigToAddModList IE relates to a list of conditional reconfigurations (e.g., intra-SN CPC) to be added or modified, and for each entry, it contains a condReconfigId IE, as well as a condExecutionCond IE and a condRRCReconfig IE associated therewith. The condExecutionCond IE indicates one or more execution conditions that need to be fulfilled in order to trigger the execution of a conditional reconfiguration (e.g., intra-SN CPC). The condRRCReconfig IE is a candidate target cell configuration, specifically an RRC Reconfiguration message, which is applied in a case where one or more associated execution conditions are met.

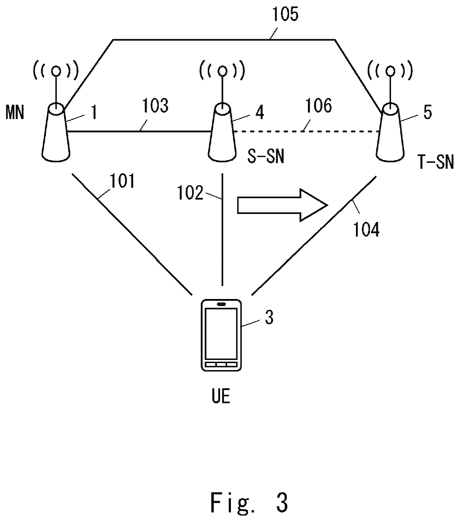

Fig. 3 shows an example configuration of a radio communication system related to a plurality of example embodiments. In the example of Fig. 3, the radio communication system includes a RAN node 1, a RAN node 4, a RAN node 5, and a UE 3. Each element (network function) shown in Fig. 2 may be implemented, for example, as a network element on dedicated hardware, as a software instance running on dedicated hardware, or as a virtualized function instantiated on an application platform. The RAN node 1, the RAN node 4, the RAN node 5, and the UE 3 in the example of Fig. 3 may have the same configurations and functions as the RAN node 1, the RAN node 2, and the UE 3 in the example of Fig. 1.

The RAN node 1 and the RAN node 4 communicate with each other via an inter-node interface (e.g., Xn interface) 103. The RAN node 1 and the RAN node 4 operate as an MN and an SN, respectively, in dual connectivity. Additionally, the RAN node 1 and the RAN node 5 communicate with each other via an inter-node interface (e.g., Xn interface) 105. The RAN node 1 and the RAN node 5 can operate as an MN and an SN, respectively, in dual connectivity. An inter-node interface (e.g., Xn interface) 106 may be configured between the RAN node 4 and the RAN node 5.

The RAN nodes 1, 4, and 5, and the UE 3 support inter-SN CPC from an SCG provided by the RAN node 4 to an SCG provided by the RAN node 5. Accordingly, in the following, the RAN node 1 may be referred to as MN 1, the RAN node 4 may be referred to as source SN (S-SN) 4, and the RAN node 5 may be referred to as target SN (T-SN) 5, candidate SN 5, or target candidate SN 5. Inter-SN CPC may be referred to as conditional SN change.

Inter-SN CPC (or conditional SN change) is an inter-SN PSCell change procedure (or SN change procedure) that is executed only if one or more CPC execution conditions are met or satisfied. The UE 3 maintains the connection with the source SN 4 and source SCG even after receiving an SN change instruction from the MN 1, and starts evaluating the execution conditions configured by the instruction. Then, in response to an execution condition being met, the UE 3 starts accessing a target candidate SN 4 and a selected candidate PSCell.

Inter-SN CPC can be initiated by the MN 1 or the source SN 4. Inter-SN CPC initiated by the MN 1 is referred to as MN initiated inter-SN CPC. On the other hand, inter-SN CPC initiated by the source SN 4 is referred to as SN initiated inter-SN CPC. In MN-initiated inter-SN CPC, the MN 1 generates a CPC execution condition. In contrast, in SN-initiated inter-SN CPC, the source SN 4 generates a CPC execution condition and sends it to the MN 1. In both MN-initiated inter-SN CPC and SN-initiated inter-SN CPC, the target candidate SN 5 generates an SCG configuration and sends it to the MN. The MN 1 then transmits a CPC configuration (e.g., ConditionalReconfiguration IE) containing the CPC execution condition and the SCG configuration to the UE 3 via an RRC Reconfiguration message.

Although not shown in Fig. 3, multiple candidate cells (i.e., candidate PSCells) provided by multiple candidate SNs 5 may be prepared for an inter-SN CPC. In an inter-SN CPC procedure, the UE 3 receives from the MN 1 configurations of one or more candidate PSCells prepared by one or more candidate SNs (i.e., one or more SCG configurations) and one or more CPC execution conditions associated therewith.

A CPC configuration for inter-SN CPC may be a conditionalReconfiguration IE contained in an RRC reconfiguration message generated by the MN 1 (hereinafter referred to as an MN RRC reconfiguration message). The conditionalReconfiguration IE can contain a condReconfigToAddModList IE. The condReconfigToAddModList IE relates to a list of conditional reconfigurations (e.g., inter-SN CPC) to be added or modified, and for each entry, it contains a condReconfigId, as well as a condExecutionCond IE (or condExecutionCondSCG IE) and a condRRCReconfig IE associated therewith. The condExecutionCond IE is included in each entry in the case of MN-initiated inter-SN CPC and indicates one or more execution conditions generated by the MN 1 that need to be fulfilled in order to trigger the execution of a conditional reconfiguration (e.g., inter-SN CPC). The condExecutionCondSCG IE is included in each entry in the case of SN-initiated inter-SN CPC and indicates one or more execution conditions generated by the source SN 4 that need to be fulfilled in order to trigger the execution of a conditional reconfiguration (e.g., inter-SN CPC). The condRRCReconfig IE is a candidate target cell configuration, specifically an SN RRC Reconfiguration message, which is applied in a case where one or more associated execution conditions are met.

The RAN nodes 1, 2, 4, and 5, and the UE 3 described with reference to Figs. 1 to 3 support enhancements for network energy savings (NES) described in the Background Art section of this specification. Specifically, the RAN nodes 1, 2, 4, and 5, and the UE 3 may support one or more of the various techniques in the time domain, frequency domain, spatial domain, and power domain described in the Background Art section to improve network energy saving. Additionally, the RAN nodes 1, 2, 4, and 5, and the UE 3 support an enhanced CHO (NES type CHO) that takes switching to the NES mode of the source cell into account. As understood from the above description, this CHO may be an intra-MN or inter-MN conditional PCell change, a conditional change from a master node to a gNB, a conditional change from a gNB to a master node, an intra-SN conditional PSCell change, or an inter-SN conditional PSCell change.

In this specification, the terms "NES cell" and "NES mode" may refer to an operating mode or state in which power consumption is reduced by using one or more of the various technologies for improving NES described above, or by using other technologies, or may refer to a cell in such an operating mode or state. The terms "NES cell" and "NES mode" may be replaced by other similar terms. For example, these may be replaced with terms such as NES state or period; low activity cell, mode, state, or period; inactive cell, mode, state, or period; deactivated/deactivation cell, mode, state, or period; or sleep cell, mode, state, or period.

To indicate low activity of the source cell of a CHO to one or more UEs, a RAN node (e.g., RAN node 1 or 4) may transmit a first signal. The first signal may be transmitted by the RAN node that provides the source cell (e.g., RAN node 1 in Fig. 1, RAN node 4 in Figs. 2 and 3) in response to the source cell being changed to the NES mode. In the examples of Fig. 2 and Fig. 3, the first signal may be transmitted by the MN 1. The first signal may be transmitted in advance to notify the change to the NES mode before the source cell dynamically changes to the NES mode. Alternatively, the first signal may be transmitted simultaneously with or after the source cell dynamically changes to the NES mode.

The first signal may include an indication of low activity of the source cell. This indication may be referred to, for example, without limitation, as NES indication, NES mode indication, NES state indication, cell low activity indication, low activity mode indication, low activity state indication, cell inactive indication, inactive mode indication, inactive state indication, cell sleep indication, sleep mode indication, or sleep state indication. The first signal or NES mode indication may indicate the activation of cell DTX or cell DRX or both.

The first signal may be L2 signaling (e.g., MAC CE), dedicated L1 signaling (e.g., dedicated DCI), or common L1 signaling (e.g., group common DCI). As will be explained in detail later, if the first signal is Layer 1 signaling, it may also serve the role of indicating a change or modification of system information. In other words, the first signal may be a DCI containing a short message indicating a change in system information, or a PDCCH carrying that DCI and Cyclic Redundancy Check (CRC) bits scrambled by a Paging Radio Network Temporary Identifier (P-RNTI). In addition to the short message indicating a change in system information, the DCI may also indicate a short message indicating the NES mode indication.

Alternatively, the first signal may be broadcast RRC signaling (e.g., system information) or dedicated RRC signaling (e.g., RRC Reconfiguration). The system information may be, for example, SIB Type 1 (SIB1), SIB2, or another SIB.

The RAN nodes 1, 2, 4, and 5, and the UE 3 described with reference to Figs. 1 to 3 support both a normal type CHO and a NES type CHO. A normal type CHO is an existing CHO, meaning that it does not require, in order for its execution to be triggered, an indication or signal indicating low activity of the source cell to be received by the UE 3. In other words, a normal type CHO is a CHO whose execution condition evaluation by the UE 3 is started immediately in response to the reception of the CHO configuration. In contrast, a NES type CHO may be a type of CHO in which the UE 3 does not immediately start evaluating the CHO execution conditions in response to receiving the CHO configuration, but delays the start of the CHO execution condition evaluation. A NES type CHO may require that the UE 3 recognize (or detect) a certain event or condition related to the change of the NES mode of the source cell after receiving the CHO configuration, in order to trigger the execution of the CHO or the start of the execution condition evaluation. A NES type CHO may require that the UE 3 recognize that the source cell has been or will be deactivated by some means after receiving the CHO configuration, in order to trigger the execution of the CHO or the start of the execution condition evaluation. A NES type CHO may require that the UE 3 receive an indication or signal of low activity of the source cell after receiving the CHO configuration, in order to trigger the execution of the CHO. In an implementation of a NES type CHO, the UE 3 delays the start of the CHO condition evaluation until it receives a first signal (or an indication of low activity of the source cell). In other words, in an implementation of a NES type CHO, the CHO condition evaluation is started after the UE 3 receives a first signal (or an indication of low activity of the source cell) from the network after receiving the CHO configuration. In other implementations of NES type CHO, after receiving the CHO configuration, the UE 3 delays the start of the CHO condition evaluation. The UE 3 may delay the start of the CHO condition evaluation until a timer started in response to the reception of the CHO configuration expires. A normal type CHO may be referred to by other names, such as a legacy CHO. A NES type CHO may be referred to by other names, such as a delayed-evaluation-type CHO.

### First Example Embodiment

This example embodiment provides improved reporting of handover failures or radio link failures (e.g., Radio Link Failure (RLF)) by a UE. An example configuration of a radio communication system according to this example embodiment may be the same as any of the example configurations described with reference to Figs. 1 to 3.

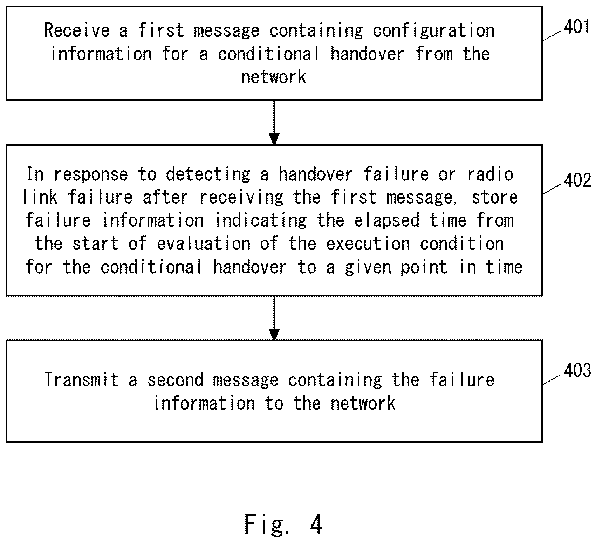

Fig. 4 shows an example of the operation of the UE 3. In step 401, the UE 3 receives a first message containing configuration information for a CHO from a network (e.g., RAN node 1 or 4). The configuration information for a CHO corresponds to a CHO configuration or a CPC configuration described above. The first message may be an RRC message, more specifically, an RRC Reconfiguration message. In the CHO described with reference to the example configuration in Fig. 1, the first message (e.g., an RRC Reconfiguration message) is sent from the source node 1 to UE 3. In the intra-SN CPC described with reference to the example configuration shown in Fig. 2, the first message (e.g., an SN RRC Reconfiguration message) is sent from the SN 4 to the UE 3, either directly or via the MN 1. In the inter-SN CPC described with reference to the example configuration shown in Fig. 3, the first message (e.g., an MN RRC Reconfiguration message) is sent from the MN 1 to the UE 3.

In step 402, the UE 3 detects a handover failure or a radio link failure after receiving the first message. In response to this detection, the UE 3 stores failure information indicating the elapsed time from the start of the evaluation of the CHO execution condition to a given point in time. For example, a handover failure is detected or declared by the UE 3 in a case where the UE 3 starts CHO execution by applying the configuration (RRC reconfiguration) of a candidate target cell based on the fulfillment of the CHO execution condition of the candidate target cell, but the CHO execution (e.g., reconfiguration with sync in CHO execution) does not complete successfully. On the other hand, for example, a radio link failure is detected or declared by the UE 3 in a case where the UE 3 detects a physical layer failure (e.g., out-of-sync) of the source cell before the UE 3 starts CHO execution to any of the candidate target cells.

The above failure information is stored if the CHO configured in the UE 3 is a NES type CHO. As previously mentioned, in some NES-type CHO implementations, CHO condition evaluation is started after the UE 3 receives a first signal (or an indication of low activity of the source cell) from the network, following the reception of the CHO configuration. If such a NES type CHO is configured in the UE 3, the UE 3 may store the aforementioned failure information. The failure information may indicate that the CHO configured in the UE 3 was for Network Energy Saving (NES). In other words, the failure information may indicate that the detected handover failure or radio link failure is related to a NES type CHO.

For a handover failure, the given point in time at which the aforementioned elapsed time ends may be the time at which the UE 3 starts CHO execution. This may be the time at which the UE 3 starts "Reconfiguration with sync" by applying the configuration of the candidate target cell whose associated execution conditions are met. In other words, the elapsed time stored as failure information may indicate the time elapsed between the start of the evaluation of the CHO execution conditions and the CHO execution. In contrast, for a radio link failure, the given point in time at which the aforementioned elapsed time ends may be the time at which the UE 3 detects the radio link failure. In other words, the elapsed time stored as failure information may indicate the time elapsed between the start of the evaluation of the CHO execution conditions and the radio link failure (detection).

In step 403, the UE 3 transmits a second message containing the failure information stored in the UE 3 to the network (or RAN node). The second message may be a UE Information Response message transmitted in a UE Information procedure specified in clause 5.4.10 of 3GPP TS 38.331 (Non-Patent Literature 8). In a UE Information procedure, the UE 3 transmits a UE Information Response message to the network in response to receiving a UE Information Request message from the network. The destination RAN node of a UE Information Response message may be the source RAN node or any of the target RAN nodes of the CHO, or it may be another RAN node different from these. The UE 3 may send a UE Information Response message containing the failure information to the RAN node that provides the cell where the RRC connection is reestablished after the handover failure or radio link failure.

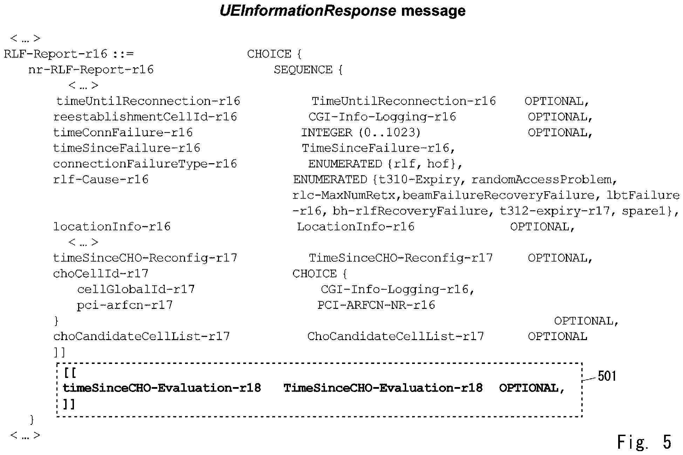

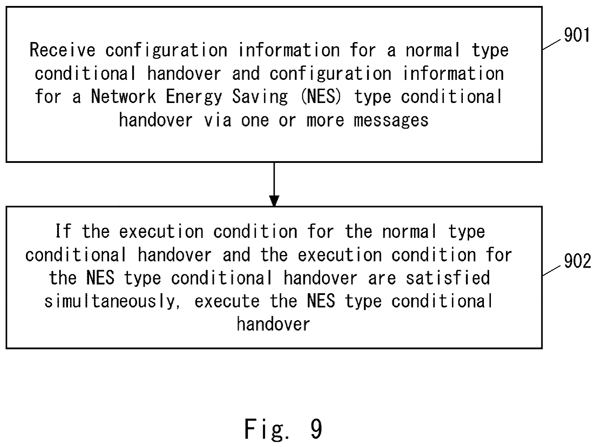

Fig. 5 shows an example of the format of a UE Information Response message. The UE Information Response message can include an RLF Report IE. In the example shown in Fig. 9, the RLF Report IE includes a timeSinceCHO-Evaluation IE 501. The timeSinceCHO-Evaluation IE 501 corresponds to the failure information described in relation to Fig. 4 and indicates the elapsed time from the start of evaluation of the CHO execution conditions after reception of the CHO configuration to a given point in time.

The network (or RAN node) receives the second message from the UE 3. The network may use the failure information, for example, but not limited to, for mobility robustness optimization (or handover optimization).

According to the operation of the UE 3 described in this example embodiment, the UE 3 can provide the network with failure information indicating the elapsed time from the start of the evaluation of a CHO execution condition to a given point in time, with respect to a handover failure or a radio link failure detected by the UE 3. This provision of failure information enables the network to be informed of details of the handover failure or radio link failure (e.g., RLF) related to the delayed CHO condition evaluation for a NES type CHO.

The UE 3 may include not only the elapsed time described above but also other information related to a NES type CHO, in the failure information related to a detected handover failure or radio link failure, and report it to the network. As previously described, the failure information may indicate that the failure is related to a NES type CHO. Additionally or alternatively, the failure information may indicate that the CHO source cell or candidate target cell, for which the handover failure or radio link failure was detected, supports NES. Additionally or alternatively, the failure information may indicate that the CHO source cell or candidate target cell, for which the handover failure or radio link failure was detected, was in NES mode. Additionally or alternatively, the failure information may indicate that the cell, in which the RRC connection re-establishment was successful after the detection of the handover failure or the radio link failure, supports NES. Additionally or alternatively, the failure information may indicate that the cell, in which the RRC connection re-establishment was successful after the detection of the handover failure or the radio link failure, was in NES mode.

### Second Example Embodiment

This example embodiment provides details of the operation of a UE in a case where the UE detects a radio link failure (e.g., RLF) before starting a delayed CHO condition evaluation for a NES type CHO. An example configuration of a radio communication system according to the present example embodiment may be the same as any of the example configurations described with reference to Figs. 1 to 3. In this example embodiment, if the UE 3 is configured with a NES type CHO, the UE 3 delays the start of the CHO condition evaluation until the reception of the first signal (or the indication of the low activity of the source cell).

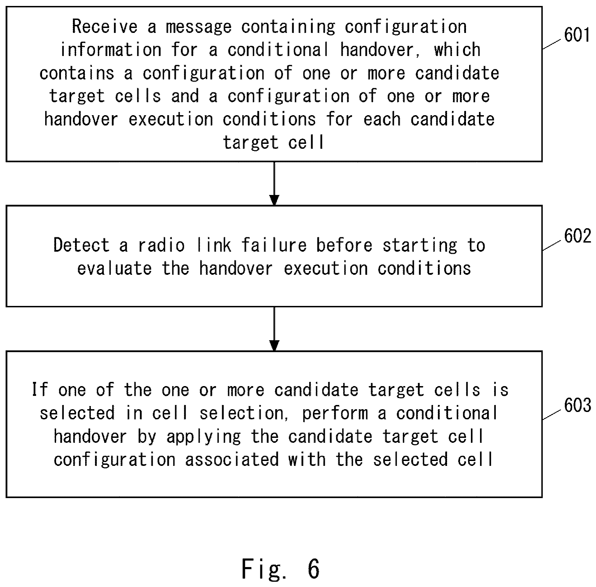

Fig. 6 shows an example of the operation of the UE 3. In step 601, the UE 3 receives a message containing configuration information for a CHO. The configuration information for a CHO corresponds to a CHO configuration or a CPC configuration described above. The configuration information includes a configuration of one or more candidate target cells and a configuration of one or more CHO execution conditions for each candidate target cell. The message carrying the configuration information may be an RRC message, more specifically, an RRC Reconfiguration message. In the CHO described with reference to the example configuration in Fig. 1, the message of step 601 (e.g., an RRC Reconfiguration message) is sent from the source node 1 to UE 3. In the intra-SN CPC described with reference to the example configuration shown in Fig. 2, this message (e.g., an SN RRC Reconfiguration message) is sent from the SN 4 to the UE 3, either directly or via the MN 1. In the inter-SN CPC described with reference to the example configuration shown in Fig. 3, this message (e.g., an MN RRC Reconfiguration message) is sent from the MN 1 to the UE 3.

In step 602, the UE 3 detects a radio link failure before starting evaluation of the handover execution conditions. In step 603, in response to the detection of the radio link failure, the UE 3 starts an RRC connection reestablishment procedure and performs cell selection in the RRC connection reestablishment procedure. If one of the one or more candidate target cells specified in the configuration information for the CHO is selected in the cell selection, the UE 3 executes the CHO by applying the candidate target cell configuration associated with the selected cell. Executing the CHO includes transmitting an RRC Reconfiguration Complete message from the UE 3 to the RAN node that manages (or controls) the selected cell.

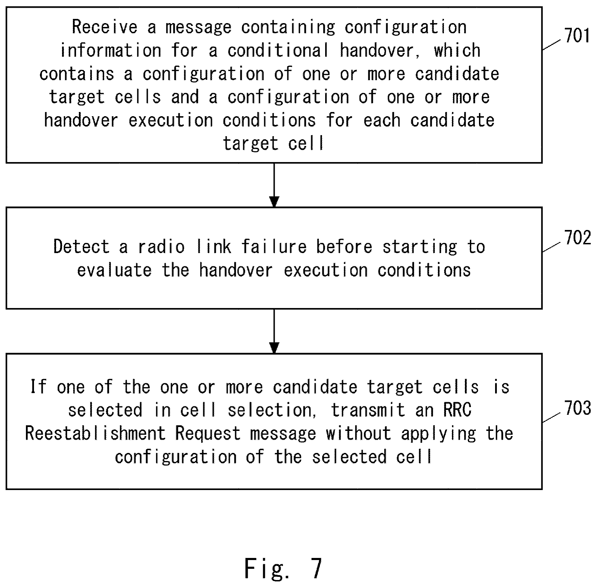

Fig. 7 shows another example of the operation of the UE 3. Steps 701 and 702 are similar to steps 601 and 602 in Fig. 6. In step 703, in response to the detection of the radio link failure, the UE 3 starts an RRC connection reestablishment procedure and performs cell selection in the RRC connection reestablishment procedure. If one of the one or more candidate target cells specified in the configuration information for the CHO is selected in the cell selection, the UE 3 transmits an RRC Reestablishment Request message, without executing the CHO using the configuration stored for the selected cell (candidate target cell), even if the configuration information for the CHO includes the "attemptCondReconfig" information element (IE) or field. In other words, the UE 3 continues or proceeds with the RRC connection reestablishment procedure without executing the CHO. The attemptCondReconfig IE is contained in the configuration information (CHO configuration) for the CHO received in step 701. The attemptCondReconfig IE indicates that the UE 3 needs to perform a CHO if the cell selected in the cell selection is one of the candidate target cells stored in the CHO configuration. The attemptCondReconfig IE may be referred to by other names.

On the other hand, if a radio link failure is detected after the UE 3 starts evaluating the CHO execution conditions, if one of the one or more candidate target cells is selected in the cell selection, and if the configuration information for the CHO includes the attemptCondReconfig IE, the UE 3 executes the CHO by applying the configuration stored for the selected cell (candidate target cell).

The operation of the UE 3 described in this example embodiment helps clarify the behavior of a UE in the event that it detects a radio link failure before starting the delayed CHO condition evaluation for a NES type CHO.

### Third Example Embodiment

This example embodiment provides details of the operation in a case where the UE detects a radio link failure (e.g., RLF) before starting a delayed CHO condition evaluation for a NES type CHO. An example configuration of a radio communication system according to the present example embodiment may be the same as any of the example configurations described with reference to Figs. 1 to 3.

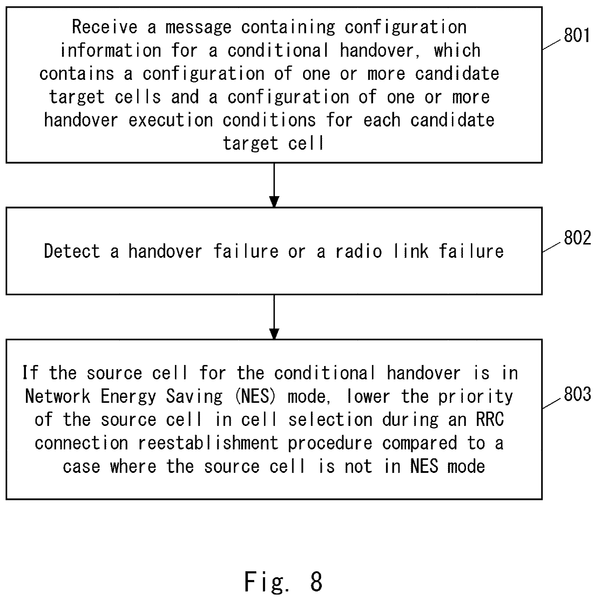

Fig. 8 shows an example of the operation of the UE 3. In step 801, the UE 3 receives a message containing configuration information for a CHO. The configuration information for a CHO corresponds to a CHO configuration or a CPC configuration described above. The configuration information includes a configuration of one or more candidate target cells and a configuration of one or more CHO execution conditions for each candidate target cell. The message carrying the configuration information may be an RRC message, more specifically, an RRC Reconfiguration message. In the CHO described with reference to the example configuration in Fig. 1, the message of step 801 (e.g., an RRC Reconfiguration message) is sent from the source node 1 to UE 3. In the intra-SN CPC described with reference to the example configuration shown in Fig. 2, this message (e.g., an SN RRC Reconfiguration message) is sent from the SN 4 to the UE 3, either directly or via the MN 1. In the inter-SN CPC described with reference to the example configuration shown in Fig. 3, this message (e.g., an MN RRC Reconfiguration message) is sent from the MN 1 to the UE 3.

In step 802, the UE 3 detects a handover failure or a radio link failure after receiving the message in step 801. In step 803, in response to detecting the handover failure or the radio link failure, the UE 3 starts an RRC connection reestablishment procedure and performs cell selection in the RRC connection reestablishment procedure. In this cell selection, if the source cell of the configured CHO is in NES mode, the UE 3 lowers the priority of the source cell compared to a case where the source cell is not in NES mode. In other words, in the cell selection during the RRC connection reestablishment procedure, if the source cell is in NES mode, the UE 3 treats the source cell so that it is less likely to be selected compared to a case where the source cell is not in NES mode.

The operation of the UE 3 described in this example embodiment helps clarify the behavior of a UE configured with a NES type CHO in the event that it detects a handover failure or radio link failure.

### Fourth Example Embodiment

This example embodiment provides details of the operation of a UE configured with both a normal type CHO and a NES type CHO. An example configuration of a radio communication system according to the present example embodiment may be the same as any of the example configurations described with reference to Figs. 1 to 3.

Fig. 9 shows an example of the operation of the UE 3. In the example shown in Fig. 9, if one or more execution conditions for a candidate target cell for a normal type CHO and one or more execution conditions for a candidate target cell for a NES type CHO are satisfied simultaneously, the UE 3 executes the NES type CHO.

In step 901, the UE 3 receives configuration information for a normal type CHO and configuration information for a NES type CHO via one or more messages. Each configuration information corresponds to a CHO configuration or a CPC configuration described above. These messages may be RRC messages, more specifically, RRC Reconfiguration messages. In the CHO described with reference to the example configuration in Fig. 1, these messages (e.g., RRC Reconfiguration messages) are sent from the source node 1 to UE 3. In the intra-SN CPC described with reference to the example configuration shown in Fig. 2, these messages (e.g., SN RRC Reconfiguration messages) are sent from the SN 4 to the UE 3, either directly or via the MN 1. In the inter-SN CPC described with reference to the example configuration shown in Fig. 3, these messages (e.g., MN RRC Reconfiguration messages) are sent from the MN 1 to the UE 3.

In step 902, if the one or more execution conditions for a candidate target cell for the normal type CHO and the one or more execution conditions for a candidate target cell for the NES type CHO are satisfied simultaneously, the UE 3 executes the NES type CHO.

Note that a normal type CHO is often used to quickly address a decrease in the source cell quality, and therefore it is expected that a normal type CHO is often an intra-frequency handover. An intra-frequency handover is a handover between cells belonging to the same frequency carrier, i.e., belonging to the same (NR) frequency band. On the other hand, since it is considered easier to achieve power reduction by simultaneously setting multiple cells within the same frequency carrier (or frequency band) to NES mode, it is expected that a NES type CHO will often be an inter-frequency handover. An inter-frequency handover is a handover between cells belonging to different frequency carriers, i.e., belonging to different (NR) frequency bands. For these reasons, if the UE 3 is configured with both a normal type CHO and a NES type CHO, the UE 3 is more likely to successfully perform a handover by performing the NES type CHO (often intra-frequency HO) than by performing the normal type CHO (often inter-frequency HO). This is because, in a situation where the NES type CHO is triggered, the target cell for the normal type CHO, which is likely to be on the same frequency as the source cell, is also considered to have a reasonable probability of transitioning to or already being in NES mode.

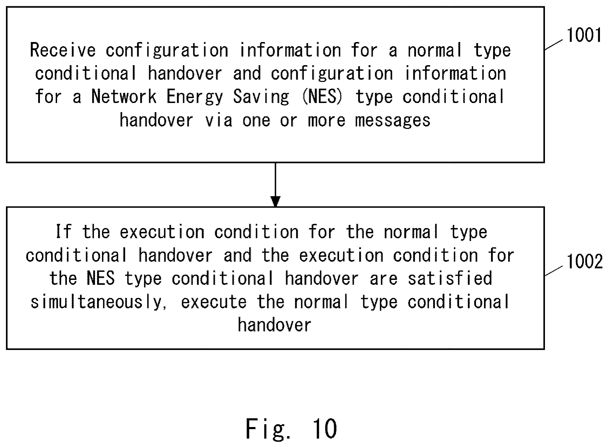

Fig. 10 shows another example of the operation of the UE 3. In the example of Fig. 10, if one or more execution conditions for a candidate target cell for a normal type CHO and one or more execution conditions for a candidate target cell for a NES type CHO are satisfied simultaneously, the UE 3 executes the normal type CHO.

Step 1001 is similar to step 901 in Fig. 9. In step 1002, if the one or more execution conditions for a candidate target cell for the normal type CHO and the one or more execution conditions for a candidate target cell for the NES type CHO are satisfied simultaneously, the UE 3 executes the normal type CHO.

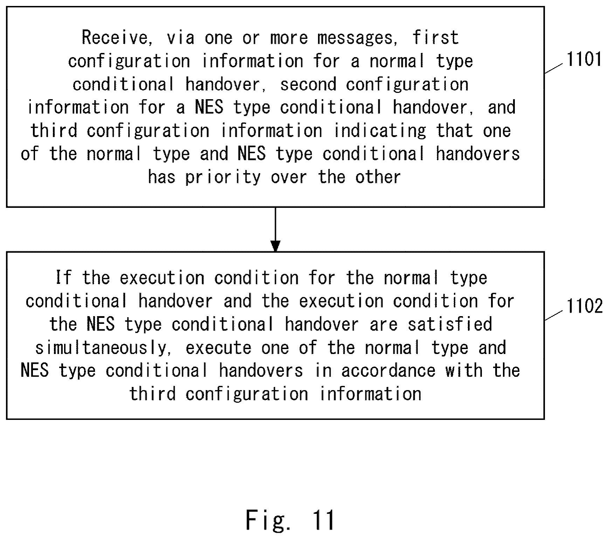

Fig. 11 shows yet another example of the operation of the UE 3. In the example of Fig. 11, if one or more execution conditions for a candidate target cell for a normal type CHO and one or more execution conditions for a candidate target cell for a NES type CHO are satisfied simultaneously, the UE 3 executes one of the normal type CHO and the NES type CHO in accordance with an instruction or configuration provided by the network.

In step 1101, the UE 3 receives, via one or more messages, first configuration information for a normal type CHO, second configuration information for a NES type CHO, and third configuration information indicating that one of the normal type and NES type conditional handovers has priority over the other. Each of the first and second configuration information corresponds to a CHO configuration or a CPC configuration described above. These messages may be RRC messages, more specifically, RRC Reconfiguration messages. In the CHO described with reference to the example configuration in Fig. 1, these messages (e.g., RRC Reconfiguration messages) are sent from the source node 1 to UE 3. In the intra-SN CPC described with reference to the example configuration shown in Fig. 2, these messages (e.g., SN RRC Reconfiguration messages) are sent from the SN 4 to the UE 3, either directly or via the MN 1. In the inter-SN CPC described with reference to the example configuration shown in Fig. 3, these messages (e.g., MN RRC Reconfiguration messages) are sent from the MN 1 to the UE 3.

In step 1102, if the one or more execution conditions for a candidate target cell for the normal type CHO and the one or more execution conditions for a candidate target cell for the NES type CHO are satisfied simultaneously, the UE 3 executes one of the normal type CHO and the NES type CHO in accordance with the third configuration information provided by the network (e.g., RAN node 1 or 4).

In yet another example, if the one or more execution conditions for a candidate target cell for the normal type CHO and the one or more execution conditions for a candidate target cell for the NES type CHO are satisfied simultaneously, the UE 3 may preferentially select inter-frequency handover from among these. In other words, the UE 3 may preferentially select a candidate target cell in a different frequency band than the source cell, which is in or planned to be in a low-activity state.

The operation of the UE 3 described in this example embodiment helps clarify the behavior of a UE in a situation where one or more execution conditions for a candidate target cell for a normal type CHO and one or more execution conditions for a candidate target cell for a NES type CHO are satisfied simultaneously.

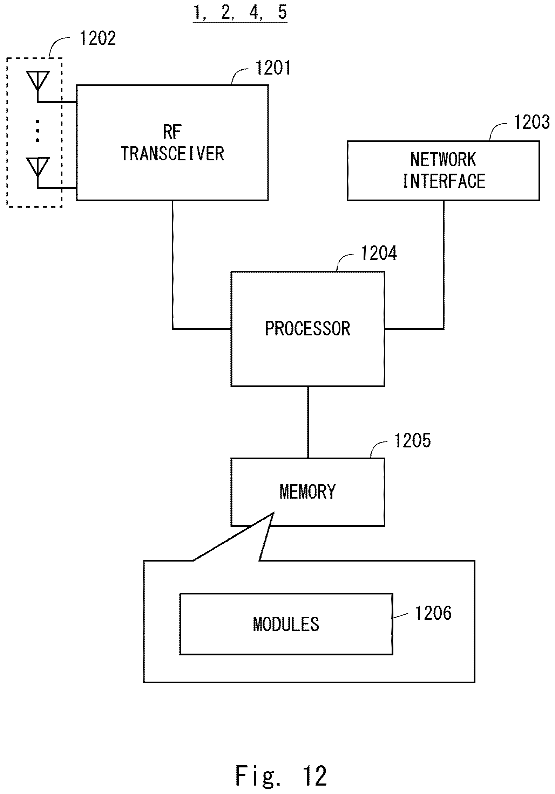

The following describes example configurations of the RAN nodes 1, 2, 4, and 5, and the UE 3 according to the multiple example embodiments described above. Fig. 12 is a block diagram showing an example configuration of the RAN node 1 according to the above example embodiments. The configurations of the other RAN nodes 2, 4, and 5 may be the same as the configuration shown in Fig. 12.

Referring to Fig. 12, the RAN node 1 includes a Radio Frequency (RF) transceiver 1201, a network interface 1203, a processor 1204, and a memory 1205. The RF transceiver 1201 performs analog RF signal processing to communicate with UEs including the UE 3. The RF transceiver 1201 may include a plurality of transceivers. The RF transceiver 1201 is coupled to an antenna array 1202 and the processor 1204. The RF transceiver 1201 receives modulated symbol data from the processor 1204, generates a transmission RF signal, and supplies the transmission RF signal to the antenna array 1202. The RF transceiver 1201 generates a baseband reception signal based on a reception RF signal received by the antenna array 1202 and supplies the baseband reception signal to the processor 1204. The RF transceiver 1201 may include an analog beamformer circuit for beamforming. The analog beamformer circuit includes, for example, a plurality of phase shifters and a plurality of power amplifiers.

The network interface 1203 is used to communicate with network nodes (e.g., RAN nodes 2 and 4, as well as control nodes and transfer nodes in the core network). For example, the network interface 1203 may include a network interface card (NIC) conforming to the IEEE 802.3 series.

The processor 1204 performs digital baseband signal processing (data plane processing) and control plane processing for radio communication. The processor 1204 may include a plurality of processors. For example, the processor 1204 may include a modem processor (e.g., a digital signal processor (DSP)) that performs digital baseband signal processing and a protocol stack processor (e.g., a central processing unit (CPU) or a micro processing unit (MPU)) that performs control plane processing.

For example, the digital baseband signal processing performed by the processor 1204 may include signal processing of the Service Data Adaptation Protocol (SDAP), Packet Data Convergence Protocol (PDCP), Radio Link Control (RLC), Medium Access Control (MAC), and Physical (PHY) layers. The control plane processing performed by the processor 1204 may include processing of Non-Access Stratum (NAS) messages, RRC messages, MAC Control Elements (CE), and Downlink Control Information (DCI).

The processor 1204 may include a digital beamformer module for beamforming. The digital beamformer module may include a Multiple Input Multiple Output (MIMO) encoder and precoder.

The memory 1205 is composed of a combination of a volatile memory and a non-volatile memory. The volatile memory is, for example, Static Random Access Memory (SRAM) or Dynamic RAM (DRAM) or a combination thereof. The non-volatile memory is Mask Read Only Memory (MROM), Electrically Erasable Programmable ROM (EEPROM), flash memory, or a hard disk drive, or any combination thereof. The memory 1205 may include storage located separate from the processor 1204. In this case, the processor 1204 may access the memory 1205 via a network interface 1203 or an I/O interface not shown.

The memory 1205 may store one or more software modules (computer programs) 1206 containing instructions and data for performing the processing by the RAN node 1 described in the above example embodiments. In some implementations, the processor 1204 may be configured to execute the software modules 1206 read from the memory 1205, thereby performing the processing of the RAN node 1 described in the above example embodiments.

In a case where the RAN node 1 is a CU (e.g., eNB-CU or gNB-CU) or a CU-CP, the RAN node 1 may not include the RF transceiver 1201 (and the antenna array 1202).

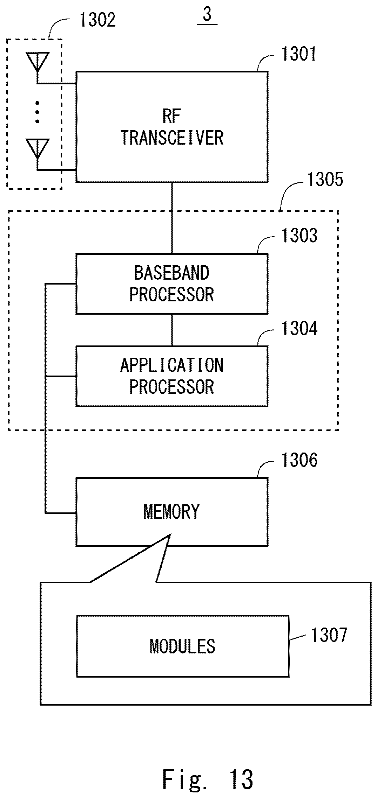

Fig. 13 shows a block diagram of an example configuration of the UE 3. The Radio Frequency (RF) transceiver 1301 performs analog RF signal processing to communicate with RAN nodes. The RF transceiver 1301 may include a plurality of transceivers. The analog RF signal processing performed by the RF transceiver 1301 includes frequency up-conversion, frequency down-conversion, and amplification. The RF transceiver 1301 is coupled with an antenna array 1302 and a baseband processor 1303. The RF transceiver 1301 receives modulated symbol data (or OFDM symbol data) from the baseband processor 1303, generates a transmission RF signal, and supplies the transmission RF signal to the antenna array 1302. The RF transceiver 1301 also generates a baseband received signal based on a received RF signal received by the antenna array 1302, and supplies the baseband received signal to the baseband processor 1303. The RF transceiver 1301 may include an analog beamformer circuit for beamforming. The analog beamformer circuit includes, for example, multiple phase shifters and multiple power amplifiers.

The baseband processor 1303 performs digital baseband signal processing (data-plane processing) and control-plane processing for radio communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 1303 may include signal processing of the SDAP, PDCP, RLC, MAC, and PHY layers. The control plane processing performed by the baseband processor 1303 may include processing of the Non-Access Stratum (NAS) protocol, RRC protocol, MAC CEs, and DCIs.

The baseband processor 1303 may perform MIMO encoding and precoding for beamforming.

The baseband processor 1303 may include a modem processor (e.g., DSP) that performs digital baseband signal processing and a protocol stack processor (e.g., CPU or MPU) that performs control plane processing. In this case, the protocol stack processor that performs control plane processing may be integrated with an application processor 1304 described below.

The application processor 1304 is also referred to as a CPU, MPU, microprocessor, or processor core. The application processor 1304 may include a plurality of processors (a plurality of processor cores). The application processor 1304 executes a system software program (operating system (OS)) and various application programs (e.g., call application, web browser, mailer, camera operation application, music player application) read from a memory 1306 or from a memory not shown, thereby realizing various functions of the UE 3.

In some implementations, as shown by the dashed line (1305) in Fig. 13, the baseband processor 1303 and the application processor 1304 may be integrated on a single chip. In other words, the baseband processor 1303 and the application processor 1304 may be implemented as a single System on Chip (SoC) device 1305. The SoC device may also be referred to as a system large-scale integration (LSI) or chipset.

The memory 1306 is a volatile memory or a non-volatile memory or a combination thereof. The memory 1306 may include a plurality of physically independent memory devices. The volatile memory is, for example, SRAM, DRAM, or a combination thereof. The non-volatile memory is, for example, MROM, EEPROM, flash memory, or a hard disk drive, or any combination thereof. For example, the memory 1306 may include an external memory device that is accessible by the baseband processor 1303, the application processor 1304, and the SoC 1305. The memory 1306 may include an internal memory device that is integrated into the baseband processor 1303, the application processor 1304, or the SoC 1305. In addition, the memory 1306 may include memory within a Universal Integrated Circuit Card (UICC).

The memory 1306 may store one or more software modules (or computer programs) 1307 that include a set of instructions and data for performing the processing by the UE 3 described in the above example embodiments. In some implementations, the baseband processor 1303 or the application processor 1304 may be configured to read and execute the software modules 1307 from the memory 1306, thereby performing the processing of the UE 3 as described in the example embodiments with reference to the drawings.

The control plane processing and operations performed by the UE 3 described in the above example embodiment can be implemented by elements other than the RF transceiver 1301 and the antenna array 1302, namely at least one of the baseband processor 1303 and the application processor 1304, and the memory 1306 that stores the software modules 1307.

As explained using Figs. 12 and 13, each of the processors of the plurality of RAN nodes and UE 3 in the above example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventors. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to a device (e.g., radio terminal, RAN node) may also be described as or in Supplementary Notes directed to methods and programs. For example, some or all of the elements listed in Supplementary Notes 2-10 that depend on Supplementary Note 1 may also be listed as Supplementary Notes that depend on Supplementary Note 21 or 23 with the same dependency as Supplementary Notes 2-10. Similarly, some or all of the elements listed in Supplementary Notes 12-20 that depend on Supplementary Note 11 may also be listed as Supplementary Notes that depend on Supplementary Note 22 or 24 with the same dependency as Supplementary Notes 12-20. Some or all of the elements described in a Supplementary Note may be applicable to various hardware, software, storage for storing software, systems, and methods.

### (Supplementary Note 1)

A radio terminal comprising:
at least one memory; and
at least one processor coupled to the at least one memory and configured to:
   receive a first message containing configuration information for a conditional handover from a network;
   store failure information indicating an elapsed time from a start of evaluation of an execution condition for the conditional handover to a given point in time in response to detecting a handover failure or a radio link failure after receiving the first message; and
   transmit a second message containing the failure information to the network.

### (Supplementary Note 2)

The radio terminal according to Supplementary Note 1, wherein the evaluation of the execution condition is started by the radio terminal after the radio terminal receives a first signal regarding low activity of a source cell of the conditional handover from the network, following reception of the first message.

### (Supplementary Note 3)

The radio terminal according to Supplementary Note 1 or 2, wherein the elapsed time indicates a time elapsed between the start of the evaluation of the execution condition and the detection of the radio link failure.

### (Supplementary Note 4)

The radio terminal according to Supplementary Note 1 or 2, wherein the elapsed time indicates a time elapsed between the start of the evaluation of the execution condition and an execution of the conditional handover.

### (Supplementary Note 5)

The radio terminal according to any one of Supplementary Notes 1 to 4, wherein
the first message is a Radio Resource Control (RRC) Reconfiguration message, and
the second message is a UE Information Response message.

### (Supplementary Note 6)

The radio terminal according to any one of Supplementary Notes 1 to 5, wherein the failure information indicates that the conditional handover is for Network Energy Saving (NES).

### (Supplementary Note 7)

The radio terminal according to any one of Supplementary Notes 1 to 6, wherein the failure information indicates that a source cell or a candidate target cell of the conditional handover, for which the handover failure or the radio link failure was detected, supports Network Energy Saving (NES).

### (Supplementary Note 8)

The radio terminal according to any one of Supplementary Notes 1 to 6, wherein the failure information indicates that a source cell or a candidate target cell of the conditional handover, for which the handover failure or the radio link failure was detected, was in a Network Energy Saving (NES) mode.

### (Supplementary Note 9)

The radio terminal according to any one of Supplementary Notes 1 to 8, wherein the failure information indicates that a cell, in which an RRC connection reestablishment was successful after the detection of the handover failure or radio link failure, supports Network Energy Saving (NES).

### (Supplementary Note 10)

The radio terminal according to any one of Supplementary Notes 1 to 8, wherein the failure information indicates that a cell, in which an RRC connection reestablishment was successful after the detection of the handover failure or radio link failure, was in a Network Energy Saving (NES) mode.

### (Supplementary Note 11)

A radio access network (RAN) node comprising:
at least one memory; and
at least one processor coupled to the at least one memory and configured to receive a message containing failure information related to a handover failure or a radio link failure from a radio terminal, wherein
the failure information indicates an elapsed time from a start of evaluation of an execution condition for a conditional handover to a given point in time.

### (Supplementary Note 12)

The RAN node according to Supplementary Note 11, wherein the evaluation of the execution condition is started by the radio terminal after the radio terminal receives a first signal regarding low activity of a source cell of the conditional handover, following reception of a first message containing configuration information for the conditional handover.

### (Supplementary Note 13)

The RAN node according to Supplementary Note 11 or 12, wherein the elapsed time indicates a time elapsed between the start of the evaluation of the execution condition and the detection of the radio link failure.

### (Supplementary Note 14)

The RAN node according to Supplementary Note 11 or 12, wherein the elapsed time indicates a time elapsed between the start of the evaluation of the execution condition and an execution of the conditional handover.

### (Supplementary Note 15)

The RAN node according to any one of Supplementary Notes 11 to 14, wherein the failure information indicates that the conditional handover is for Network Energy Saving (NES).

### (Supplementary Note 16)

The RAN node according to any one of Supplementary Notes 11 to 15, wherein the failure information indicates that a source cell or a candidate target cell of the conditional handover, for which the handover failure or the radio link failure was detected, supports Network Energy Saving (NES).

### (Supplementary Note 17)

The RAN node according to any one of Supplementary Notes 11 to 15, wherein the failure information indicates that a source cell or a candidate target cell of the conditional handover, for which the handover failure or the radio link failure was detected, was in a Network Energy Saving (NES) mode.

### (Supplementary Note 18)

The RAN node according to any one of Supplementary Notes 11 to 17, wherein the failure information indicates that a cell, in which an RRC connection reestablishment was successful after the detection of the handover failure or radio link failure, supports Network Energy Saving (NES).

### (Supplementary Note 19)

The RAN node according to any one of Supplementary Notes 11 to 17, wherein the failure information indicates that a cell, in which an RRC connection reestablishment was successful after the detection of the handover failure or radio link failure, was in a Network Energy Saving (NES) mode.

### (Supplementary Note 20)

The RAN node according to any one of Supplementary Notes 11 to 19, wherein the at least one processor is configured to use the failure information for mobility robustness optimization.

### (Supplementary Note 21)

A method performed by a radio terminal, the method comprising:
receiving a first message containing configuration information for a conditional handover from a network;
storing failure information indicating an elapsed time from a start of evaluation of an execution condition for the conditional handover to a given point in time in response to detecting a handover failure or a radio link failure after receiving the first message; and
transmitting a second message containing the failure information to the network.

### (Supplementary Note 22)

A method performed by a radio access network (RAN) node, the method comprising:
receiving a message containing failure information related to a handover failure or a radio link failure from a radio terminal, wherein
the failure information indicates an elapsed time from a start of evaluation of an execution condition for a conditional handover to a given point in time.

### (Supplementary Note 23)

A program for causing a computer to perform a method for a radio terminal, the method comprising:
receiving a first message containing configuration information for a conditional handover from a network;
storing failure information indicating an elapsed time from a start of evaluation of an execution condition for the conditional handover to a given point in time in response to detecting a handover failure or a radio link failure after receiving the first message; and
transmitting a second message containing the failure information to the network.

### (Supplementary Note 24)

A program for causing a computer to perform a method for a radio access network (RAN) node,
the method comprising receiving a message containing failure information related to a handover failure or a radio link failure from a radio terminal, wherein
the failure information indicates an elapsed time from a start of evaluation of an execution condition for a conditional handover to a given point in time.

### (Supplementary Note 25)

A radio terminal comprising:
at least one memory; and
at least one processor coupled to the at least one memory and configured to:
   receive a message containing configuration information for a conditional handover, the configuration information containing a configuration of one or more candidate target cells and a configuration of one or more handover execution conditions for each candidate target cell; and
if a radio link failure is detected before evaluation of the one or more handover execution conditions is started after the message is received, and if one of the one or more candidate target cells is selected by cell selection, execute the conditional handover by applying the configuration associated with the selected cell.

### (Supplementary Note 26)

The radio terminal according to Supplementary Note 25, wherein executing the conditional handover includes transmitting a Radio Resource Control (RRC) Reconfiguration Complete message.

### (Supplementary Note 27)

A radio terminal comprising:
at least one memory; and
at least one processor coupled to the at least one memory and configured to:
   receive a message containing configuration information for a conditional handover, the configuration information containing a configuration of one or more candidate target cells and a configuration of one or more handover execution conditions for each candidate target cell; and
   if a radio link failure is detected before evaluation of the one or more handover execution conditions is started after the message is received, and if one of the one or more candidate target cells is selected by cell selection, transmit a Radio Resource Control (RRC) Reestablishment Request message without applying the configuration of the selected cell even if the message includes a first field or information element, wherein
the first field or information element indicates that the radio terminal needs to perform the conditional handover if a cell selected in cell selection is included in the one or more candidate target cells.

### (Supplementary Note 28)

The radio terminal according to Supplementary Note 27, wherein the at least one processor is configured to, if a radio link failure is detected after the evaluation of the one or more handover execution conditions is started, if one of the one or more candidate target cells is selected in cell selection, and if the message includes the first field or information element, execute the conditional handover by applying the configuration associated with the selected cell.

### (Supplementary Note 29)

A radio terminal comprising:
at least one memory; and
at least one processor coupled to the at least one memory and configured to:
   receive a message containing configuration information for a conditional handover, the configuration information containing a configuration of one or more candidate target cells and a configuration of one or more handover execution conditions for each candidate target cell; and
   if a handover failure or radio link failure is detected after receiving the message, and a source cell of the conditional handover is in a Network Energy Saving (NES) mode, lower a priority of the source cell in cell selection during an RRC connection reestablishment procedure compared to a case where the source cell is not in the NES mode.

### (Supplementary Note 30)

A radio terminal comprising:
at least one memory; and
at least one processor coupled to the at least one memory and configured to:
   receive first configuration information for a first type of conditional handover and second configuration information for a second type of conditional handover via one or more messages, wherein
      the first type of conditional handover is a conditional handover that does not require, in order for its execution to be triggered, a first signal relating to low activity of a source cell of the conditional handover to be received by the radio terminal after the first configuration information is received, and
      the second type of conditional handover is a conditional handover that requires, in order for its execution to be triggered, the first signal to be received by the radio terminal after the second configuration information is received; and
   execute the second type of conditional handover if an execution condition for the first type of conditional handover and an execution condition for the second type of conditional handover are satisfied simultaneously.

### (Supplementary Note 31)

A radio terminal comprising:
at least one memory; and
at least one processor coupled to the at least one memory and configured to:
   receive first configuration information for a first type of conditional handover and second configuration information for a second type of conditional handover via one or more messages, wherein
      the first type of conditional handover is a conditional handover that does not require, in order for its execution to be triggered, a first signal relating to low activity of a source cell of the conditional handover to be received by the radio terminal after the first configuration information is received, and
      the second type of conditional handover is a conditional handover that requires, in order for its execution to be triggered, the first signal to be received by the radio terminal after the second configuration information is received; and
   execute the first type of conditional handover if an execution condition for the first type of conditional handover and an execution condition for the second type of conditional handover are satisfied simultaneously.

### (Supplementary Note 32)

at least one memory; and
at least one processor coupled to the at least one memory and configured to:
   receive, via one or more messages, first configuration information for a first type of conditional handover, second configuration information for a second type of conditional handover, and third configuration information indicating that one of the first and second types of conditional handover has priority over the other, wherein
      the first type of conditional handover is a conditional handover that does not require, in order for its execution to be triggered, a first signal relating to low activity of a source cell of the conditional handover to be received by the radio terminal after the first configuration information is received, and
      the second type of conditional handover is a conditional handover that requires, in order for its execution to be triggered, the first signal to be received by the radio terminal after the second configuration information is received; and
   execute one of the first and second types of conditional handovers in accordance with the third configuration information if an execution condition for the first type of conditional handover and an execution condition for the second type of conditional handover are satisfied simultaneously.

### (Supplementary Note 33)

A radio access network (RAN) node comprising:
at least one memory; and
at least one processor coupled to the at least one memory and configured to transmit to a radio terminal, via one or more messages, first configuration information for a first type of conditional handover, second configuration information for a second type of conditional handover, and third configuration information indicating that one of the first and second types of conditional handover has priority over the other, wherein
the first type of conditional handover is a conditional handover that does not require, in order for its execution to be triggered, a first signal relating to low activity of a source cell of the conditional handover to be received by the radio terminal after the first configuration information is received,
the second type of conditional handover is a conditional handover that requires, in order for its execution to be triggered, the first signal to be received by the radio terminal after the second configuration information is received, and
the third configuration information causes the radio terminal to execute one of the first and second types of conditional handovers in accordance with the third configuration information if an execution condition for the first type of conditional handover and an execution condition for the second type of conditional handover are satisfied simultaneously.

This application is based upon and claims the benefit of priority from Japanese Patent Application No. 2023-020905, filed on February 14, 2023, the disclosure of which is incorporated herein in its entirety by reference.

### Reference Signs List

- 1, 2, 4, 5: RAN node
- 3: UE
- 1204: Processor
- 1205: Memory
- 1206: Modules
- 1303: Baseband processor
- 1304: Application processor
- 1306: Memory
- 1307: Modules

## Claims

1. A radio terminal comprising:
at least one memory; and
at least one processor coupled to the at least one memory and configured to:
receive a first message containing configuration information for a conditional handover from a network;
store failure information indicating an elapsed time from a start of evaluation of an execution condition for the conditional handover to a given point in time in response to detecting a handover failure or a radio link failure after receiving the first message; and
transmit a second message containing the failure information to the network.

2. The radio terminal according to claim 1, wherein the evaluation of the execution condition is started by the radio terminal after the radio terminal receives a first signal regarding low activity of a source cell of the conditional handover from the network, following reception of the first message.

3. The radio terminal according to claim 1 or 2, wherein the elapsed time indicates a time elapsed between the start of the evaluation of the execution condition and the detection of the radio link failure.

4. The radio terminal according to claim 1 or 2, wherein the elapsed time indicates a time elapsed between the start of the evaluation of the execution condition and an execution of the conditional handover.

5. The radio terminal according to any one of claims 1 to 4,
wherein
the first message is a Radio Resource Control (RRC) Reconfiguration message, and
the second message is a UE Information Response message.

6. The radio terminal according to any one of claims 1 to 5,
wherein the failure information indicates that the conditional handover is for Network Energy Saving (NES).

7. The radio terminal according to any one of claims 1 to 6,
wherein the failure information indicates that a source cell or a candidate target cell of the conditional handover, for which the handover failure or the radio link failure was detected, supports Network Energy Saving (NES).

8. The radio terminal according to any one of claims 1 to 6,
wherein the failure information indicates that a source cell or a candidate target cell of the conditional handover, for which the handover failure or the radio link failure was detected, was in a Network Energy Saving (NES) mode.

9. The radio terminal according to any one of claims 1 to 8,
wherein the failure information indicates that a cell, in which an RRC connection reestablishment was successful after the detection of the handover failure or radio link failure, supports Network Energy Saving (NES).

10. The radio terminal according to any one of claims 1 to 8,
wherein the failure information indicates that a cell, in which an RRC connection reestablishment was successful after the detection of the handover failure or radio link failure, was in a Network Energy Saving (NES) mode.

11. A radio access network (RAN) node comprising:
at least one memory; and
at least one processor coupled to the at least one memory and configured to receive a message containing failure information related to a handover failure or a radio link failure from a radio terminal,
wherein
the failure information indicates an elapsed time from a start of evaluation of an execution condition for a conditional handover to a given point in time.

12. The RAN node according to claim 11, wherein the evaluation of the execution condition is started by the radio terminal after the radio terminal receives a first signal regarding low activity of a source cell of the conditional handover, following reception of a first message containing configuration information for the conditional handover.

13. The RAN node according to claim 11 or 12, wherein the elapsed time indicates a time elapsed between the start of the evaluation of the execution condition and the detection of the radio link failure.

14. The RAN node according to claim 11 or 12, wherein the elapsed time indicates a time elapsed between the start of the evaluation of the execution condition and an execution of the conditional handover.

15. The RAN node according to any one of claims 11 to 14, wherein the failure information indicates that the conditional handover is for Network Energy Saving (NES).

16. The RAN node according to any one of claims 11 to 15, wherein the failure information indicates that a source cell or a candidate target cell of the conditional handover, for which the handover failure or the radio link failure was detected, supports Network Energy Saving (NES).

17. The RAN node according to any one of claims 11 to 15, wherein the failure information indicates that a source cell or a candidate target cell of the conditional handover, for which the handover failure or the radio link failure was detected, was in a Network Energy Saving (NES) mode.

18. The RAN node according to any one of claims 11 to 17, wherein the failure information indicates that a cell, in which an RRC connection reestablishment was successful after the detection of the handover failure or radio link failure, supports Network Energy Saving (NES).

19. The RAN node according to any one of claims 11 to 17, wherein the failure information indicates that a cell, in which an RRC connection reestablishment was successful after the detection of the handover failure or radio link failure, was in a Network Energy Saving (NES) mode.

20. The RAN node according to any one of claims 11 to 19, wherein the at least one processor is configured to use the failure information for mobility robustness optimization.

21. A method performed by a radio terminal, the method comprising:
receiving a first message containing configuration information for a conditional handover from a network;
storing failure information indicating an elapsed time from a start of evaluation of an execution condition for the conditional handover to a given point in time in response to detecting a handover failure or a radio link failure after receiving the first message; and
transmitting a second message containing the failure information to the network.

22. A method performed by a radio access network (RAN) node, the method comprising:
receiving a message containing failure information related to a handover failure or a radio link failure from a radio terminal, wherein
the failure information indicates an elapsed time from a start of evaluation of an execution condition for a conditional handover to a given point in time.

23. A program for causing a computer to perform a method for a radio terminal, the method comprising:
receiving a first message containing configuration information for a conditional handover from a network;
storing failure information indicating an elapsed time from a start of evaluation of an execution condition for the conditional handover to a given point in time in response to detecting a handover failure or a radio link failure after receiving the first message; and
transmitting a second message containing the failure information to the network.

24. A program for causing a computer to perform a method for a radio access network (RAN) node,
the method comprising receiving a message containing failure information related to a handover failure or a radio link failure from a radio terminal, wherein
the failure information indicates an elapsed time from a start of evaluation of an execution condition for a conditional handover to a given point in time.

25. A radio terminal comprising:
at least one memory; and
at least one processor coupled to the at least one memory and configured to:
receive a message containing configuration information for a conditional handover, the configuration information containing a configuration of one or more candidate target cells and a configuration of one or more handover execution conditions for each candidate target cell; and
if a radio link failure is detected before evaluation of the one or more handover execution conditions is started after the message is received, and if one of the one or more candidate target cells is selected by cell selection, execute the conditional handover by applying the configuration associated with the selected cell.

26. The radio terminal according to claim 25, wherein executing the conditional handover includes transmitting a Radio Resource Control (RRC) Reconfiguration Complete message.

27. A radio terminal comprising:
at least one memory; and
at least one processor coupled to the at least one memory and configured to:
receive a message containing configuration information for a conditional handover, the configuration information containing a configuration of one or more candidate target cells and a configuration of one or more handover execution conditions for each candidate target cell; and
if a radio link failure is detected before evaluation of the one or more handover execution conditions is started after the message is received, and if one of the one or more candidate target cells is selected by cell selection, transmit a Radio Resource Control (RRC) Reestablishment Request message without applying the configuration of the selected cell even if the message includes a first field or information element, wherein
the first field or information element indicates that the radio terminal needs to perform the conditional handover if a cell selected in cell selection is included in the one or more candidate target cells.

28. The radio terminal according to claim 27, wherein the at least one processor is configured to, if a radio link failure is detected after the evaluation of the one or more handover execution conditions is started, if one of the one or more candidate target cells is selected in cell selection, and if the message includes the first field or information element, execute the conditional handover by applying the configuration associated with the selected cell.

29. A radio terminal comprising:
at least one memory; and
at least one processor coupled to the at least one memory and configured to:
receive a message containing configuration information for a conditional handover, the configuration information containing a configuration of one or more candidate target cells and a configuration of one or more handover execution conditions for each candidate target cell; and
if a handover failure or radio link failure is detected after receiving the message, and a source cell of the conditional handover is in a Network Energy Saving (NES) mode, lower a priority of the source cell in cell selection during an RRC connection reestablishment procedure compared to a case where the source cell is not in the NES mode.

30. A radio terminal comprising:
at least one memory; and
at least one processor coupled to the at least one memory and configured to:
receive first configuration information for a first type of conditional handover and second configuration information for a second type of conditional handover via one or more messages, wherein
the first type of conditional handover is a conditional handover that does not require, in order for its execution to be triggered, a first signal relating to low activity of a source cell of the conditional handover to be received by the radio terminal after the first configuration information is received, and
the second type of conditional handover is a conditional handover that requires, in order for its execution to be triggered, the first signal to be received by the radio terminal after the second configuration information is received; and
execute the second type of conditional handover if an execution condition for the first type of conditional handover and an execution condition for the second type of conditional handover are satisfied simultaneously.

31. A radio terminal comprising:
at least one memory; and
at least one processor coupled to the at least one memory and configured to:
receive first configuration information for a first type of conditional handover and second configuration information for a second type of conditional handover via one or more messages, wherein
the first type of conditional handover is a conditional handover that does not require, in order for its execution to be triggered, a first signal relating to low activity of a source cell of the conditional handover to be received by the radio terminal after the first configuration information is received, and
the second type of conditional handover is a conditional handover that requires, in order for its execution to be triggered, the first signal to be received by the radio terminal after the second configuration information is received; and
execute the first type of conditional handover if an execution condition for the first type of conditional handover and an execution condition for the second type of conditional handover are satisfied simultaneously.

32. at least one memory; and
at least one processor coupled to the at least one memory and configured to:
receive, via one or more messages, first configuration information for a first type of conditional handover, second configuration information for a second type of conditional handover, and third configuration information indicating that one of the first and second types of conditional handover has priority over the other,
wherein
the first type of conditional handover is a conditional handover that does not require, in order for its execution to be triggered, a first signal relating to low activity of a source cell of the conditional handover to be received by the radio terminal after the first configuration information is received, and
the second type of conditional handover is a conditional handover that requires, in order for its execution to be triggered, the first signal to be received by the radio terminal after the second configuration information is received; and
execute one of the first and second types of conditional handovers in accordance with the third configuration information if an execution condition for the first type of conditional handover and an execution condition for the second type of conditional handover are satisfied simultaneously.

33. A radio access network (RAN) node comprising:
at least one memory; and
at least one processor coupled to the at least one memory and configured to transmit to a radio terminal, via one or more messages, first configuration information for a first type of conditional handover, second configuration information for a second type of conditional handover, and third configuration information indicating that one of the first and second types of conditional handover has priority over the other, wherein
the first type of conditional handover is a conditional handover that does not require, in order for its execution to be triggered, a first signal relating to low activity of a source cell of the conditional handover to be received by the radio terminal after the first configuration information is received,
the second type of conditional handover is a conditional handover that requires, in order for its execution to be triggered, the first signal to be received by the radio terminal after the second configuration information is received, and
the third configuration information causes the radio terminal to execute one of the first and second types of conditional handovers in accordance with the third configuration information if an execution condition for the first type of conditional handover and an execution condition for the second type of conditional handover are satisfied simultaneously.
